# EUROPEAN PATENT APPLICATION

(11) **EP 3 869 670 A1**
(43) Date of publication of application: **25.08.2021**
(21) Application number: 20158772.2
(22) Date of filing: 21.02.2020
(51) Int. Cl.: H02K 1/20, H02K 1/27, H02K 7/18, H02K 9/04

(54) **GENERATOR FOR AN ELECTRICAL MACHINE HAVING IMPROVED COOLING SYSTEM, AND WIND TURBINE**

(71) Applicant: Siemens Gamesa Renewable Energy A/S, 7330 Brande (DK)
(72) Inventor: Christensen, Jens Brix, 7100 Vejle (DK); Jensen, Simon Vyff, 7160 Tørring (DK); Oestergaard, Sune Borg, 7400 Herning (DK)
(74) Representative: Aspacher, Karl-Georg

(57) **Abstract**

It is described a generator for an electrical machine, the generator comprising a stator (2) and a rotor (3). The rotor (3) comprises at least one permanent magnet and being rotatable around a rotor axis (4) relatively to the stator (2). The stator (2) comprises a plurality of stator stacks (5), each stator stack (5) comprising a plurality of stacked metal sheets (6), and a plurality of coil windings (7) being at least partially wound around the metal sheets (6) with a distance to each other, wherein radially extending duct-like channels (8) are provided between adjacent stator stacks (5) with a respective spacer arranged between the adjacent stator stacks (5). The radially extending duct-like channels (8) being configured to guide a cooling fluid. An axially extending gap (13) is provided between the stator (2) and the rotor (3), the axially extending gap (13) is configured to guide the cooling fluid, the axially extending gap (13) being in a fluid-connection to each of the radially extending duct-like channels (8). At least one stator stack (5) comprises a step (14) at least at the stacked metal sheet (6) that is arranged axially outermost of the at least one stator stack (5) with respect to a direction of the rotor axis (4), wherein the step (14) is arranged at a transition or branch-off from the axially extending gap (13) to the corresponding radially extending duct-like channel (8).

## Description

### Field of invention

The present invention relates to a generator for an electrical machine and to a wind turbine.

A generator cooling system in an offshore direct drive wind turbine conventionally comprises fans that push cold air into an air gap from both drive and non-drive ends of the generator, thereby removing heat from the generator as the air returns to the fans through a large plurality of air ducts in the stator. The air gap and the ducts comprise narrow channels, which results in high air velocities with high pressure losses, requiring increasingly larger fans for every generation of the turbine.

Currently, a branch-off from the air gap to the air ducts involves a sharp 90° corner in the regions with the highest air velocities, which leads to massive pressure losses. The pressure losses around the corners are responsible for approximately 22% of the total hydraulic power that the fans must provide to the generator air flow.

This could be improved by rounding-off the corners of laminated or stacked metal sheets of the stator with some radius. However, this significantly increases the complexity of manufacturing the stator as the stator stacks consist of multiple thin sheets that are stacked during assembly. The rounded corners would require a stacking sequence of multiple sheet shapes, and thus multiple tools for manufacturing the metal sheets. Up to now, little to no efforts have been made to improve the flow field into the air ducts along the different generations of direct drive wind turbines, and larger air flows have been achieved up to now by increasing the size of the fans.

### Summary of the Invention

There may be a need for a generator for an electrical machine which reduces pressure losses of a cooling fluid in an inexpensive and simple manner. This need may be met by the subject matters according to the independent claims. The present invention is further developed as set forth in the dependent claims.

According to a first aspect of the invention, a generator for an electrical machine is provided. The generator comprises a stator and a rotor. The rotor comprises at least one permanent magnet and being rotatable around a rotor axis relatively to the stator. The stator comprises a plurality of stator stacks, wherein each stator stack comprising a plurality of stacked metal sheets, and a plurality of coil windings being at least partially wound around the metal sheets with a distance to each other. Radially extending duct-like channels are provided between adjacent stator stacks with a respective spacer arranged between the adjacent stator stacks, wherein the radially extending duct-like channels are configured to guide a cooling fluid. An axially extending gap is provided between the stator and the rotor, wherein the axially extending gap is configured to guide the cooling fluid, and the axially extending gap is in a fluid-connection to each of the radially extending duct-like channels. At least one stator stack comprises a step at least at the stacked metal sheet that is arranged axially outermost of the at least one stator stack with respect to a direction of the rotor axis, wherein the step is arranged at a transition or branch-off from the axially extending gap to the corresponding radially extending duct-like channel.

In the context of the present invention, the terms "radial" and "axial" refer to the rotor axis of the generator, that is usually the rotational axis of the rotor, wherein the axial direction extends in parallel to the rotor axis and the radial direction extends orthogonal to the rotor axis.

By introducing the small step in the stator, the generator according to the present invention obtains a desirable flow similar to a conventional generator which uses a sharp corner. CFD-simulations (Computational-fluid-dynamics simulations) show that a 3 mm step branching into a 5 mm duct-like channel reduces the pressure loss across the corner by 60%. By implementing these findings to the entire generator flow, the relative contribution to the hydraulic power of the fans is reduced to 11%, resulting in a total air flow increased by 5%. The increased air flow enhances the heat transfer which leads to lower temperatures in all parts of the generator.

As the present invention does not implement rounded corners, the manufacturing of the generator is less complex, for example by providing one or more metal sheets for realizing the step. At the same time, the stacking sequence is simplified compared to a generator having rounded corners. By slightly altering the manufacturing process, an improved air flow is realized for an economic upgrade of the generator. In addition, lower generator temperatures enable a higher power production, an operation at higher ambient temperatures, an improved lifetime, and lower manufacturing costs.

In an embodiment, the generator is configured to guide the cooling fluid in the axially extending gap in at least one predetermined flow direction, and the at least one stator stack comprises the step at least at the stacked metal sheet that is arranged most downstream with respect to the predetermined flow direction.

In an embodiment, the step comprises at least one planar surface. The at least one planar surface can extend in the radial direction, in the axial direction, or can be inclined at any angle. Preferably, the at least one planar surface extends in the axial direction so that the manufacture of the stator is very simple. If the planar surface is inclined, a smooth air flow with less turbulences can be obtained.

In an embodiment, the step completely penetrates the metal sheet of the at least one stator stack in an axial direction of the stator. Also in this case, the manufacture of the stator is very simple.

In an embodiment, the step partially penetrates the metal sheet of the at least one stator stack in an axial direction of the stator. In this case, the manufacture of the stator is still simple, and the step can be provided with variable and optimum dimensions which are adapted to the wind turbine generation.

In an embodiment, the step penetrates a plurality of the metal sheets of the at least one stator stack in an axial direction of the stator. Preferably, a radial height of the step is stepwise reduced in an axial direction starting out from the axially outermost metal sheet of the at last one stator stack. In another embodiment, each of the plurality of metal sheets, which form the step in the at least one stator stack, has a constant height in the radial direction. In these embodiments, the manufacture of the stator is still simple, while the step can further be provided with variable and optimum dimensions which are adapted to the wind turbine generation.

In an embodiment, the step has an axial length between 1 and 6 mm and a radial height between 1 and 6 mm, preferably an axial length between 2.5 and 3.5 mm and a radial height between 2.5 and 3.5 mm. These dimensions exhibit a smooth air flow with less turbulences, while the thermal, mechanical and electromagnetic properties are excellent.

In an embodiment, the step is formed by four to twelve metal sheets, preferably by five to eight metal sheets.

According to a second aspect of the invention, a wind turbine comprising the generator is provided.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
- Fig. 1: shows a wind turbine and the different elements thereof;
- Fig. 2: shows a schematic front-view of a generator according to an exemplary embodiment;
- Fig. 3: shows a longitudinal sectional view of the generator according to Fig. 2; and
- Fig. 4: shows a schematic detail of a generator according to an exemplary embodiment.

### Detailed Description

The illustrations in the drawings are schematically. It is noted that in different figures, similar or identical elements are provided with the same reference signs.

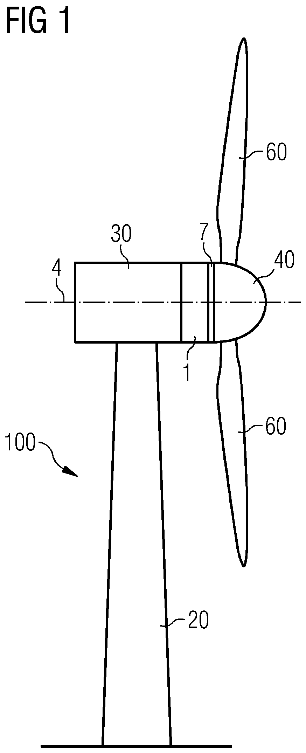

**Fig. 1** shows a wind turbine 100. The wind turbine 100 comprises a nacelle 30 and a tower 20. The nacelle 30 is mounted at the top of the tower 20. The nacelle 30 is mounted rotatable with regard to the tower 20 by means of a yaw bearing. The axis of rotation of the nacelle 30 with regard to the tower 20 is referred to as the yaw axis.

The wind turbine 100 also comprises a hub 40 with three rotor blades 60 (of which two rotor blades 60 are depicted in Fig. 1). The hub 40 is mounted rotatable with regard to the nacelle 30 by means of a main bearing 70. The hub 40 is mounted rotatable about a rotor axis 4.

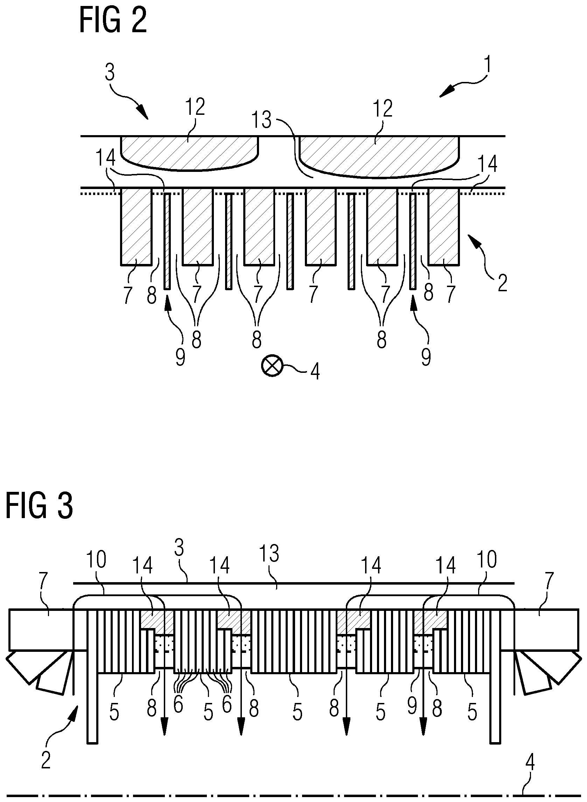

The wind turbine 100 furthermore comprises a generator 1. The generator 1 in turn comprises a rotor 3 (see Fig. 2) connecting the generator 1 with the hub 40. The hub 40 is directly connected to the generator 1, thus the wind turbine 100 is referred to as a gearless, direct-driven wind turbine. Such a generator 1 is referred as direct drive generator. As an alternative, the hub 40 may also be connected to the generator 1 via a gear box. This type of wind turbine 100 is referred to as a geared wind turbine. The present invention is suitable for both types of wind turbines 100.

The generator 1 is accommodated within the nacelle 30. The generator 1 is arranged and prepared for converting the rotational energy from the hub 40 into electrical energy in the shape of an AC power.

**Fig. 2** shows a schematic front-view of the generator 1, and **Fig. 3** shows a longitudinal sectional view of the generator according to Fig. 2. The generator 1 comprises a stator 2 and the rotor 3 having a plurality of permanent magnets 12. The rotor 3 is rotatable around the rotor axis 4 and relatively to the stator 2. In the entire specification, the terms "radial" and "axial" refer to the rotor axis 4, where the axial direction extends in parallel to the rotor axis 4 and the radial direction extends orthogonal to the rotor axis 4.

In the embodiment, the rotor 3 is disposed radially outside of the stator 2. The present invention is also applicable to a generator, where the rotor 3 is disposed radially inside of the stator 2.

The stator 2 is formed by a plurality of stator stacks 5 (Fig. 3), wherein each stator stack 5 comprises a plurality of adjacently disposed metal sheets 6 (Fig. 3) made of steel, for instance. Coil windings 7 are wound around tooth-like protrusions of the stator stacks 5, that is radially extending portions of the respective metal sheets 6.

An axially extending gap 13 is provided between the stator 2 and the rotor 3, wherein the axially extending gap 13 is configured to guide a cooling fluid such as cooling air.

Further, radially extending duct-like channels 8 are provided between adjacent stator stacks 5, wherein spacers 9 are disposed in the duct-like channels 8 to contact the adjacent stator stacks 5. Hence, the radially extending duct-like channels 8 are formed by establishing several gaps between the adjacent stator stacks 5 so that adjacent stator stacks 5 are kept in a certain distance to each other.

The axially extending gap 13 is in a fluid-connection to each of the radially extending duct-like channels 8. Reference sign 10 in Fig. 3 designates arrows which indicate a cooling fluid flow direction provided by a given fan power of a fan (not shown). In the embodiment of Fig. 3, the cooling fluid is introduced from both the drive end and the non-drive end into the axially extending gap 13, i.e. from the front end and the back end of the generator 1 when referring to the axial direction. That is, the cooling fluid supplied from the drive end cools a front part of the generator 1, and the cooling fluid supplied from the non-drive end cools a back part of the generator 1. After having entered the duct-like channels 8 from the axially extending gap 13, the cooling fluid is then guided vertically downwards. Reference 10 can designate the air flow in a shape of a closed loop; once entering the axially extending gap 13, the air enters the duct-like channels 8. From there it can pass a heat exchanger and the fan (both not shown). From there it is pushed/pulled back through the coil windings 7 and back into the axially extending gap 13. Alternatively, the air could also be discharged from the generator 1 towards the outside.

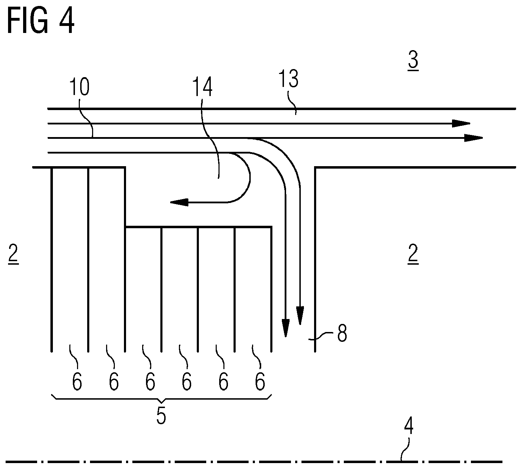

Fig. 4 shows a schematic detail of a generator 1 according to an exemplary embodiment. According to the present invention, each stator stack 5 comprises a step 14 (Fig. 3) at least at that stacked metal sheet 6 which is arranged axially outermost of the stator stack 5 with respect to a direction of the rotor axis 4. Each step 14 is arranged at a transition or branch-off from the axially extending gap 13 to the corresponding radially extending duct-like channel 8. In other words, the step 14 is arranged at least at the stacked metal sheet 6 that is arranged most downstream with respect to the predetermined flow direction as indicated by reference sign 10 in Figures 3 and 4.

Preferably, the step 14 comprises at least one planar surface and is therefore easy to manufacture. The at least one planar surface can extend in the radial direction, in the axial direction, or can be inclined at any angle. The arrangement of the planar surface can be adapted to the present generation of the wind turbine 100.

The step 14 penetrates a plurality of the metal sheets 6 of the at least one stator stack 5 in an axial direction of the stator 2. Each of the plurality of metal sheets 6, which form the step 14, has a constant height in the radial direction. Therefore, a radial height of the step 14 is kept constant. The step 14 can be formed by four to twelve metal sheets 6, preferably by five to eight metal sheets 6. The step 14 can have an axial length between 1 and 6 mm and a radial height between 1 and 6 mm, preferably an axial length between 2.5 and 3.5 mm and a radial height between 2.5 and 3.5 mm. These dimensions exhibit a smooth air flow with less turbulences, while the thermal, mechanical and electromagnetic properties are excellent.

In the embodiment of Fig. 4, the stator 2 comprises, at the left-hand side, a first plurality of relatively large metal sheets 6 of the same size, at the right-hand side, a second plurality of relatively small metal sheets 6 of the same size. Therefore, only two different tool sets are necessary for forming the metal sheets 6 of the stator 2 so that the manufacture of the stator 2 is kept easy.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A generator (1) for an electrical machine (100), the generator (1) comprising a stator (2) and a rotor (3), wherein
the rotor (3) comprising at least one permanent magnet (12) and being rotatable around a rotor axis (4) relatively to the stator (2);
the stator (2) comprises a plurality of stator stacks (5), each stator stack (5) comprising a plurality of stacked metal sheets (6), and a plurality of coil windings (7) being at least partially wound around the metal sheets (6) with a distance to each other, wherein radially extending duct-like channels (8) are provided between adjacent stator stacks (5) with a respective spacer (9) arranged between the adjacent stator stacks (5), the radially extending duct-like channels (8) being configured to guide a cooling fluid;
an axially extending gap (13) is provided between the stator (2) and the rotor (3), the axially extending gap (13) is configured to guide the cooling fluid, the axially extending gap (13) being in a fluid-connection to each of the radially extending duct-like channels (8); and
at least one stator stack (5) comprises a step (14) at least at the stacked metal sheet (6) that is arranged axially outermost of the at least one stator stack (5) with respect to a direction of the rotor axis (4), wherein the step (14) is arranged at a transition or branch-off from the axially extending gap (13) to the corresponding radially extending duct-like channel (8).

2. The generator (1) according to the preceding claim, wherein
the generator (1) is configured to guide the cooling fluid in the axially extending gap (13) in at least one predetermined flow direction; and
the at least one stator stack (5) comprises the step (14) at least at the stacked metal sheet (6) that is arranged most downstream with respect to the predetermined flow direction.

3. The generator (1) according to any one of the preceding claims, wherein
the step (14) comprises at least one planar surface.

4. The generator (1) according to any one of the preceding claims, wherein
the step (14) completely penetrates the metal sheet (6) of the at least one stator stack (5) in an axial direction of the stator (2).

5. The generator (1) according to any one of the preceding claims, wherein
the step (14) partially penetrates the metal sheet (6) of the at least one stator stack (5) in an axial direction of the stator (2).

6. The generator (1) according to any one of the preceding claims, wherein
the step (14) penetrates a plurality of the metal sheets (6) of the at least one stator stack (5) in an axial direction of the stator (2).

7. The generator (1) according to any one of the preceding claims, wherein
a radial height of the step (14) is stepwise reduced in an axial direction starting out from the axially outermost metal sheet (6) of the at last one stator stack (5).

8. The generator (1) according to the preceding claims 6 and 7, wherein
each of the plurality of metal sheets (6), which form the step (14) in the at least one stator stack (5), has a constant height in the radial direction.

9. The generator (1) according to claim 6, wherein
the step (14) has a constant radial height.

10. The generator (1) according to any one of the preceding claims, wherein
the step (14) has an axial length between 1 and 6 mm and a radial height between 1 and 6 mm, preferably an axial length between 2.5 and 3.5 mm and a radial height between 2.5 and 3.5 mm

11. The generator (1) according to any one of the preceding claims, wherein
the step (14) is formed by four to twelve metal sheets (6), preferably by five to eight metal sheets (6).

12. A wind turbine (100) comprising the generator (1) as set forth in any one of the preceding claims.
